Europäisches Patentamt

European Patent Office

Office européen des brevets

(19)

(11) Numéro de publication : **0 375 540 B1**

(12) **FASCICULE DE BREVET EUROPEEN**

(45) Date de publication du fascicule du brevet :
05.04.95 Bulletin 95/14

(51) Int. Cl.⁶ : **H04N 7/167**

(21) Numéro de dépôt : **89403553.4**

(22) Date de dépôt : **19.12.89**

(54) **Procédé d'embrouillage de signaux vidéo composite PAL SECAM et NTSC décodeur de signaux embrouillés par ce procédé.**

(30) Priorité : **23.12.88 FR 8817093**

(43) Date de publication de la demande :
**27.06.90 Bulletin 90/26**

(45) Mention de la délivrance du brevet :
**05.04.95 Bulletin 95/14**

(84) Etats contractants désignés :
**AT BE CH DE ES FR GB GR IT LI LU NL SE**

(56) Documents cités :
**EP-A- 0 127 383
DE-A- 3 600 326
US-A- 2 847 768
INTERNATIONAL CONFERENCE ON SECURE
COMMUNICATION SYSTEMS, 22-23 février
1984, pages 59-65, IEEE, New York, US; N.
LODGE et al.: "Vision scrambling of C-MAC
DBS signals"**

(73) Titulaire : **LABORATOIRE EUROPEEN DE
RECHERCHES ELECTRONIQUES AVANCEES
9, Place des Vosges
La Défense 5
F-92400 Courbevoie (FR)**

(72) Inventeur : **Daniel, Patrick
THOMSON-CSF
SCPI
Cédex 67
F-92045 Paris la Défense (FR)**
Inventeur : **Guillon, Jean-Claude
THOMSON-CSF
SCPI
Cédex 67
F-92045 Paris la Défense (FR)**

(74) Mandataire : **Ruellan-Lemonnier, Brigitte et al
THOMSON CONSUMER ELECTRONICS
9 Place des Vosges
La Défence 10
F-92400 Courbevoie (FR)**

**Description**

La présente invention se rapporte à un procédé d'embrouillage de signaux vidéo composite PAL SECAM et NTSC ainsi qu'à un décodeur de signaux embrouillés par ce procédé.

Pour embrouiller les signaux vidéo des images de télévision d'un système de télévision à péage, on connaît un grand nombre de procédés. Parmi ceux-ci, on connaît un procédé d'embrouillage par permutation circulaire en ligne. Ce procédé connu, bien que permettant un embrouillage de l'image, n'est pas à priori à l'abri de tout "piratage", à cause de certaines caractéristiques temporelles du signal embrouillé qu'il est facile de localiser.

Un procédé de codage connu est décrit dans le document WO-A-84/00656. Le procédé qui y est présenté consiste à intervertir les six demi-lignes de trois lignes vidéo consécutives, les signaux de synchronisation étant inclus dans lesdites demi-lignes. Un facteur aléatoire est introduit dans le procédé par l'utilisation d'un générateur pseudo-aléatoire qui détermine quelles lignes sont brouillées et lesquelles ne le sont pas.

La présente invention a pour objet un procédé d'embrouillage d'images de télévision qui rende les images reçues méconnaissables et très difficiles à désembrouiller par un utilisateur non autorisé, et qui convienne aux signaux vidéo PAL aussi bien que SECAM ou NTSC. L'invention a également pour objet un décodeur pour signaux ainsi embrouillés, qui soit simple et peu onéreux.

Le procédé d'embrouillage, conforme à l'invention, est un procédé d'embrouillage de signaux vidéo composite, selon lequel on effectue l'embrouillage par permutation circulaire en ligne commandé par une séquence pseudo-aléatoire, et le désembrouillage à l'aide d'une séquence pseudo-aléatoire identique à et synchronisée avec celle d'embrouillage, la séquence pseudo-aléatoire dépendant d'un mot de commande dont la valeur encryptée est transmise avec le signal vidéo, caractérisé par le fait que le début de la zone embrouillée (B+C) de chaque ligne est choisi de façon à être situé après le début de la partie utile de la ligne (DUL).

Selon un aspect du procédé de l'invention, le décalage du début de la zone embrouillée varie au cours du temps. De façon avantageuse, ce décalage change de valeur toutes les 40ms.

Selon encore un autre aspect du procédé de l'invention, on retarde, à l'émission, toute la partie non embrouillée de chaque ligne utile, et ce retard est égal à la durée d'une ligne.

Le décodeur conforme à l'invention comporte, dans son circuit numérique désembrouilleur vidéo, en tant que lignes à retard, deux files de type "FIFO" pour lesquelles on a accès au compteur d'écriture/lecture uniquement par leurs entrées de remise à zéro, et un registre tampon.

Le décodeur, conforme à l'invention, comporte dans son circuit des dispositifs d'embrouillage et de désembrouillage de signaux en vidéo composite par permutation de ligne dans un émetteur et dans des récepteurs, respectivement, caractérisé par le fait que chaque décodeur de récepteur comporte, dans son circuit numérique de désembrouillage vidéo, en tant que lignes à retard, deux piles de type "FIFO" alternativement en mode d'écriture des signaux vidéo embrouillés et en mode de lecture, ledit décodeur comportant également un registre tampon recevant le segment non embrouillé (A) d'une ligne, ledit segment non embrouillé correspondant à la ligne qui sera lue consécutivement à partir de l'une des piles FIFO.

L'invention sera mieux comprise à la lecture de la description détaillée d'un mode de réalisation, pris comme exemple non limitatif et illustré par le dessin annexé, sur lequel:
- la figure 1 est un chronogramme d'une ligne vidéo composite non embrouillée,
- la figure 2 est un chronogramme de la ligne vidéo embrouillée selon le procédé de l'invention,
- la figure 3 est un schéma synoptique partiel d'un décodeur conforme à l'invention, et
- la figure 4 est un chronogramme de signaux apparaissant dans le décodeur de la figure 3.

Avant embrouillage, le signal vidéo composite à émettre est conforme au rapport 624 du CCIR pour ce qui concerne le système SECAM.

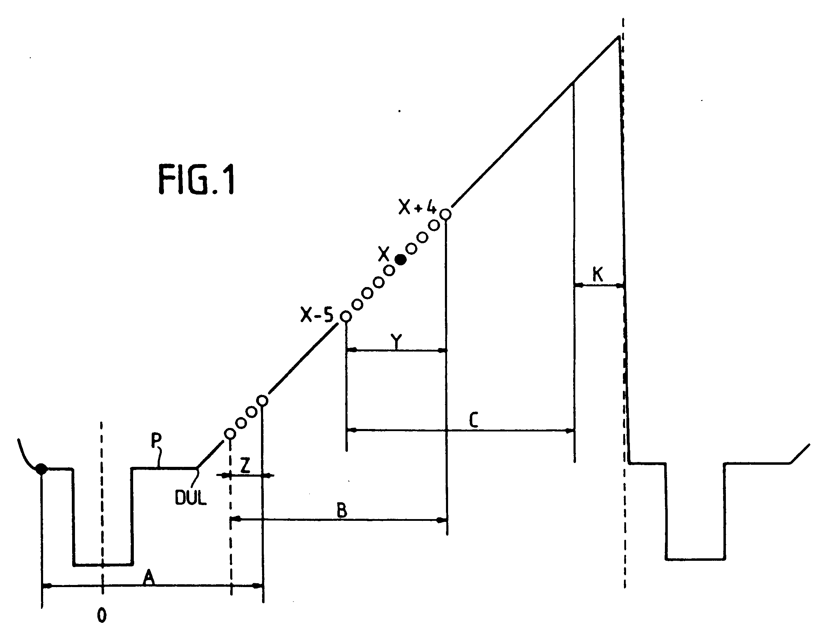

La référence temporelle de ce signal vidéo est constituée par le milieu de l'impulsion de synchronisation ligne. L'échantillon coïncidant avec cette référence temporelle porte le numéro zéro. Il y a 896 échantillons par ligne (fréquence horloge d'échantillonnage : 14 MHz). Cette référence est représentée figure 1. Sur cette figure 1 on a désigné par X le point courant de la ligne choisi comme point de coupure en vue de l'embrouillage.

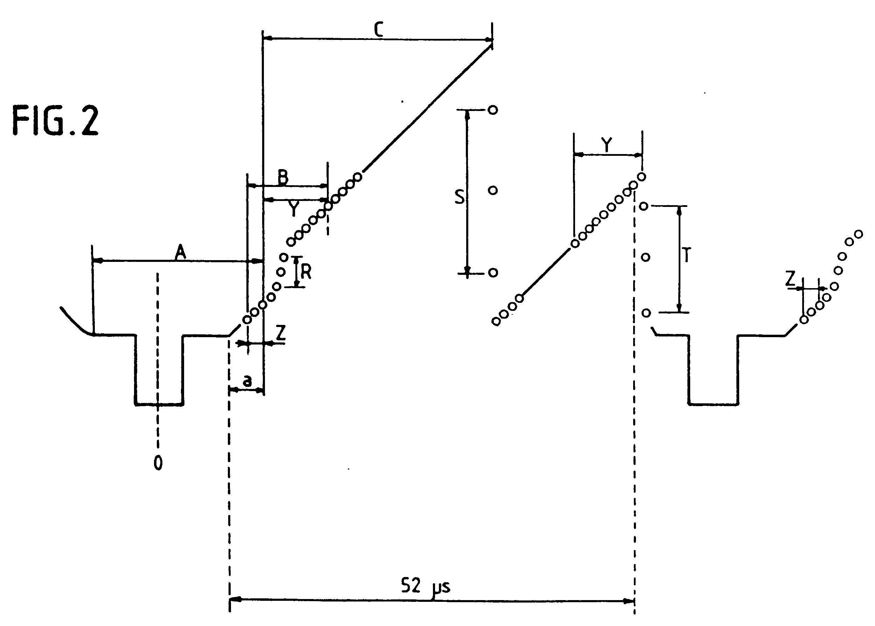

Le signal vidéo est embrouillé en définissant deux segments dans la partie utile de la ligne et en échangeant temporellement la position de ces deux segments (voir figure 2). La position du point définissant ces deux segments est commandée par un générateur pseudo-aléatoire ne pouvant être correctement initialisé que si le mot de contrôle d'accès a lui-même été correctement décrypté dans le décodeur. L'intervalle de suppression ligne n'est pas affecté par l'embrouillage.

Une ligne vidéo avant embrouillage est découpée en 3 segments :

1° Segment A : c'est l'intervalle de suppression ligne : celui-ci n'est pas embrouillé et la séquence de la sous-porteuse chrominance est en accord avec la séquence d'identification couleur trame.

2° Le segment C correspondant à la fin de la ligne utile, avant embrouillage.

3° Le segment B correspondant au début de la ligne utile, avant embrouillage.

On a également défini sur la figure 1 deux zones de recouvrement Z et Y dont le rôle apparaîtra dans la suite de la description, et une zone K de fin du signal vidéo actif. Les définitions et rôles de ces divers segments et zones sont repris en détail dans le Tableau 1.

Les segments B et C sont transmis avec une ligne d'avance par rapport à la salve de sous-porteuse sur le palier de suppression ligne, ceci afin de compenser le retard introduit dans le désembrouilleur.

En figure 2, on a représenté une période du signal vidéo de la figure 1 après embrouillage selon le procédé de l'invention. Cet embrouillage consiste à effectuer, outre la permutation autour du point de coupure X, un décalage (a) (voir figure 2) du début de la zone embrouillée par rapport au début de la partie utile de la ligne concernée; ceci permet de masquer au mieux la position du point de coupure : le début de la partie utile de la ligne (DUL sur la figure 1), qui est en même temps la fin du palier de suppression de la ligne P, est au niveau du noir, et est donc une référence de niveau vidéo facilitant la détection du point de coupure. Par contre, au-delà du point DUL, le niveau vidéo est quelconque et variable et ne peut pas servir de référence. On accroît ainsi la résistance au piratage de l'embrouillage.

Sur la figure 2, on a repéré les trois segments A, B, C, ainsi que les zone Y et Z précitées. En outre, on a repéré trois zones de transition R, S, T. Ces segments et zones sont définis en détail dans le tableau 2.

Pour tolérer une incertitude sur la reconnaissance de la référence temporelle, un certain nombre d'échantillons sont répétés de part et d'autre du point de coupure. Ces échantillons répétés sont également utilisés, en association avec des points interpolés, pour éviter que les distorsions des transitions artificielles introduites au voisinage du point de coupure par les distorsions du canal de transmission n'affectent la qualité de l'image désembrouillée.

L'utilisation de points interpolés permet également d'accroître la résistance à toute tentative de piratage si on s'attaque directement à l'aspect physique du signal transmis.

D'autre part, l'embrouillage du signal vidéo n'affecte pas totalement les 52 µs de la durée du signal utile. En effet, l'échantillon N, représentant le premier échantillon vidéo et donc, le premier échantillon soumis à l'embrouillage s'est vu attribuer une place décalée sur sa droite. Ainsi, l'échantillon N ne correspondra plus à un niveau noir théorique décelable mais à un niveau corrélé au contenu de l'image qui a priori n'est pas prédictible.

Le segment A, dont la durée peut être modulable en vue d'accroître l'immunité au piratage, présente l'avantage de laisser subsister sur la partie gauche d'une image embrouillée un zone non embrouillée, en général de faible largeur, mais qui permet au spectateur non encore abonné d'avoir une idée du programme diffusé. La modulation de la durée du segment A, qui peut par exemple se faire toutes les 40 ms grâce à l'utilisation de la totalité ou d'une partie de l'information constituée par le mot contrôle combiné à l'information de l'état du compteur d'image, fait apparaître sur l'écran une partie claire de largeur variable à un rythme de 25 Hz, ce qui est gênant pour l'oeil humain.

Dans les zones de transition R, S, T, on met en forme les échantillons concernés afin de lisser ces transitions.

La conséquence de la répétition des échantillons et de l'insertion des échantillons d'interpolation est que la partie active de la ligne reconstituée après désembrouillage est réduite de 1,2 µs environ.

L'identificateur d'information de chrominance qui, à l'émission avant embrouillage, précède l'information de chrominance correspondante, se retrouve, après désembrouillage dans le décodeur, précédant l'information de chrominance qui le précédait avant embrouillage : si on avait par exemple avant embrouillage la séquence ... /identificateur de (R-Y)n-1/(R-Y)n-1/identificateur de (B-Y)n/B-Y)n/identificateur de (R-Y)n+1/(R-Y)n+1/ ;on a après désembrouillage ...identificateur de (B-Y)n/(R-Y)n1/identificateur de (R-Y)n+1/(B-Y)n/..., ce qui produirait de fausses couleurs dans les lignes désembrouillées. Pour éviter ce phénomène, les décodeurs connus comportent des lignes à retard (ou des circuits équivalents) retardant d'une ligne l'identificateur d'informations de chrominance; ces lignes à retard, en général des files "FIFO", ont un prix de revient non négligeable.

L'invention prévoit de retarder i'identificateur d'informations de chrominance non pas dans les décodeurs, mais dans l'émetteur, et d'utiliser, dans les décodeurs, à la place d'une "FIFO" un simple registre tampon, dont le prix de revient est nettement inférieur à celui d'une "FIFO"; cet artifice a l'avantage de faire émettre un signal embrouillé avec des fausses informations sur la couleur de chaque ligne.

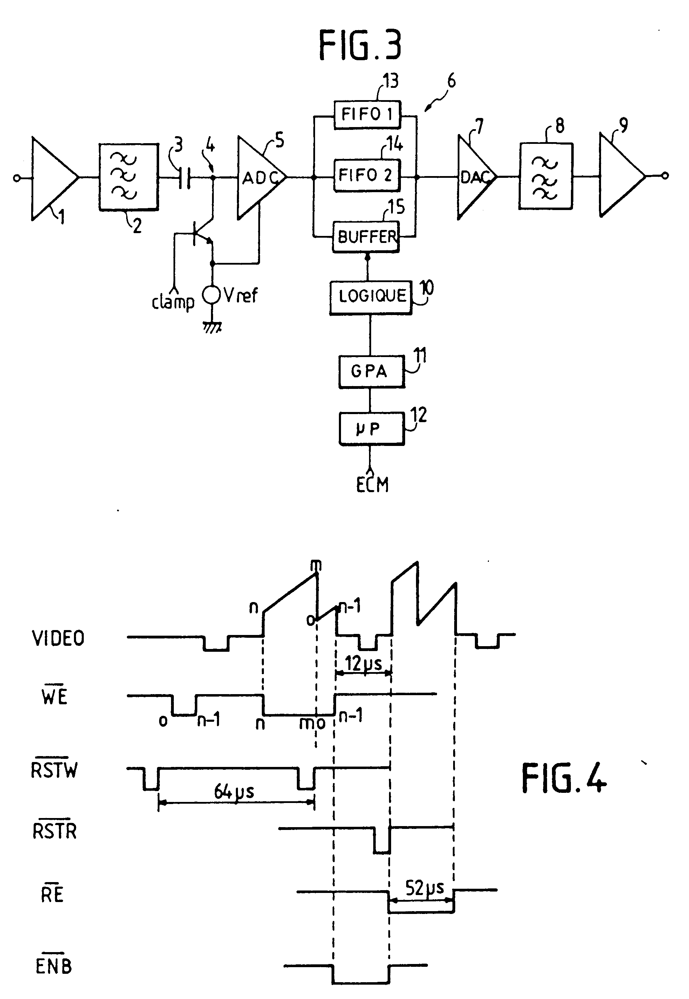

On a représenté en figure 3 le bloc- diagramme du circuit numérique désembrouilleur vidéo d'un décodeur conforme à l'invention, avec les quelques circuits qui sont branchés en amont et en aval de ce circuit numérique et qui sont utiles pour la compréhension de l'invention. Les autres circuits du décodeur sont des circuits habituels et ne sont donc pas décrits ici.

La chaîne vidéo représentée en figure 3 comporte successivement :- un amplificateur 1 recevant les signaux d'un tuner (non représenté), un filtre passe bas 2, un condensateur d'isolation galvanique 3, un circuit de clamping 4, un convertisseur analogique-numérique 5, un circuit numérique désembrouilleur 6, un convertisseur numérique-analogique 7, un filtre passe-bas 8, et un amplificateur 9. le circuit 6 est commandé par un circuit logique 10 qui reçoit des valeurs de points de coupure d'un générateur pseudo-aléatoire 11. Le générateur 11 reçoit des mots de contrôle d'un processeur 12 recevant lui-même des messages d'accès ECM d'un dispositif de sécurité (non représenté).

Le circuit 6 comporte, en parallèle, une première "FIFO" 13, une deuxième "FIFO" 14, et un registre tampon 15. Les "FIFO" sont, de préférence, des circuits de marque NEC référencés $\mu$ PD 41101$_{c-x}$ (avec X = 1, 2, ou 3)

Pour de telles "FIFO", on a accès au compteur d'écriture/lecture uniquement par leurs entrées de remise à zéro, ce qui implique que le désembrouillage d'une ligne J doit démarrer à la ligne J-1.

Les principaux signaux de commande des "FIFO" 13 et 14 sont représentés en figure 4. Ce sont :

WE : autorisation d'écriture, RSTW : remise à zéro en écriture en écriture, RSTR : remise à zéro en lecture, et RE : autorisation de lecture, et ENB : activation du registre tampon 15.

## TABLEAU 1

| Segment | Définition | Explications |
|---------|------------|--------------|
| A | Suppression ligne | Transmis sans modification de position temporelle |
| B | 1er segment de la vidéo active | |
| C | 2ème segment de la vidéo active | |
| Z | Zone de recouvrement entre la suppression ligne et la vidéo active | Destinées à tolérer une erreur de phase de la référence temporelle et à éliminer les distorsions dûes à la réponse transitoire du canal de transmission |
| Y | zone de recouvrement au niveau du point de coupure | |
| K | Fin de la vidéo active | Echantillons non transmis |

## TABLEAU 2

| Segment | Définition | Explications |
|---|---|---|
| A | Suppression ligne | Transmis sans modification de position temporelle |
| B | 1er segment de la vidéo active | Transmis avec une ligne d'avance et avec la position du 2ème segment |
| C | 2ème segment de la vidéo active | Transmis avec une ligne d'avance et avec la position du 1er segment |
| Y | zone de recouvrement au niveau du point de coupure | échantillons transmis au début du segment C et à la fin du segment B |
| Z | Zone de recouvrement | |
| R | Transition suppression ligne/vidéo active | |
| S | Transition fin / début de la ligne active | |
| T | Transition vidéo active /suppression ligne | |

## Revendications

1. Procédé d'embrouillage de signaux vidéo composite, selon lequel on effectue l'embrouillage par permutation circulaire en ligne commandé par une séquence pseudo-aléatoire, et le désembrouillage à l'aide d'une séquence pseudo-aléatoire identique à et synchronisée avec celle d'embrouillage, la séquence pseudo-aléatoire dépendant d'un mot de commande dont la valeur encryptée est transmise avec le signal vidéo, caractérisé par le fait que le début de la zone embrouillée (B+C) de chaque ligne est choisi de façon à être situé après le début de la partie utile de la ligne (DUL).

2. Procédé selon la revendication 1, caractérisé par le fait que le début de la zone embrouillée varie au cours du temps.

3. Procédé selon la revendication 2, caractérisé par le fait que ladite variation du début de la zone embrouillée a lieu toutes les 40ms.

4. Procédé selon l'une quelconque des revendications précédentes, caractérisé par le fait que l'on retarde à l'émission toute la partie non embrouillée (A) de chaque ligne et que ce retard est égal à la durée d'une ligne.

5. Procédé selon l'une quelconque des revendications précédentes, caractérisé par le fait que l'on répète des échantillons de part et d'autre du point de coupure (X) de chaque ligne.

6. Procédé selon la revendication 5, caractérisé par le fait que l'on insère des échantillons d'interpolation.

7. Décodeur pour système de transmission d'images comportant des dispositifs d'embrouillage et de désembrouillage de signaux en vidéo composite par permutation de ligne dans un émetteur et dans des récepteurs, respectivement, caractérisé par le fait que chaque décodeur de récepteur comporte, dans son circuit numérique de désembrouillage vidéo (6), en tant que lignes à retard, deux piles de type "FIFO" (13 et 14) alternativement en mode d'écriture des signaux vidéo embrouillés et en mode de lecture, ledit décodeur comportant également un registre tampon (15) recevant le segment non embrouillé (A) d'une ligne, ledit segment non embrouillé correspondant à la ligne qui sera lue consécutivement à partir de l'une des piles FIFO (13, 14).

8. Dispositif selon la revendication 7, caractérisé par le fait que les piles "FIFO" sont du type NEC μ PD 41101 c-x (avec x = 1, 2 ou 3).

9. Dispositif selon l'une des revendications 7 ou 8, caractérisé en ce que les FIFO comportent des compteurs d'adressage en lecture/écriture comprenant des entrées de remise à zéro.

10. Dispositif selon l'une des revendications 7 à 9, caractérisé en ce qu'il décode des signaux embrouillés selon le procédé conforme aux revendications 1 à 6.


## Patentansprüche

1. Verfahren zur Verwürfelung von zusammengesetzten Videosignalen, bei dem die Verwürfelung durch ringförmige Permutation auf der Zeile erfolgt und durch eine Pseudozufallsfolge gesteuert wird, während die Entwürfelung mit Hilfe einer identischen Pseudozufallsfolge wie bei der Verwürfelung und synchron mit dieser erfolgt, wobei die Pseudozufallsfolge von einem Steuerwort abhängt, dessen verschlüsselter Wert mit dem Videosignal übertragen wird, dadurch gekennzeichnet, daß der Beginn der verwürfelten Zone (B+C) jeder Zeile so gewählt wird, daß er nach dem Beginn des Nutzbereichs der Zeile (DUL) liegt.

2. Verfahren nach Anspruch 1, dadurch gekennzeichnet, daß der Beginn der verwürfelten Zone zeitlich variiert.

3. Verfahren nach Anspruch 2, dadurch gekennzeichnet, daß die Veränderung des Beginns der verwürfelten Zone alle 40 ms stattfindet.

4. Verfahren nach einem beliebigen der vorhergehenden Ansprüche, dadurch gekennzeichnet, daß bei der Aussendung der ganze nicht verwürfelte Teil (A) jeder Zeile verzögert wird, und daß diese Verzögerung gleich der Dauer einer Zeile ist.

5. Verfahren nach einem beliebigen der vorhergehenden Ansprüche, dadurch gekennzeichnet, daß Tastproben zu beiden Seiten des Trennpunkts (X) jeder Zeile wiederholt werden.

6. Verfahren nach Anspruch 5, dadurch gekennzeichnet, daß Interpolationstastproben eingefügt werden.

7. Dekoder für ein Bildübertragungssystem, mit Vorrichtungen zur Verwürfelung und zur Entwürfelung von zusammengesetzten Videosignalen durch Zeilenpermutation in einen Sender bzw. in Empfängern, dadurch gekennzeichnet, daß jeder Empfängerdekoder in seiner digitalen Video-Entwürfelungsschaltung (6) als Verzögerungsleitungen zwei FIFO-Register (13, 14) aufweist, die abwechselnd im Schreibmodus der verwürfelten Videosignale bzw. im Lesemodus sind, wobei der Dekoder auch ein Pufferregister (15) enthält, das das nicht verwürfelte Segment (A) einer Zeile empfängt, wobei dieses nicht verwürfelte Segment der Zeile entspricht, die nachfolgend aus einem der FIFO-Register (13, 14) ausgelesen werden wird.

8. Vorrichtung nach Anspruch 7, dadurch gekennzeichnet, daß die FIFO-Register vom Typ NEC $\mu$PD41101$_{c\text{-}x}$ sind (mit x = 1, 2 oder 3).

9. Vorrichtung nach einem der Ansprüche 7 und 8, dadurch gekennzeichnet, daß die FIFO-Register Adressenzähler für Lesen und Schreiben besitzen, die Nullsetzungseingänge aufweisen.

10. Vorrichtung nach einem der Ansprüche 7 bis 9, dadurch gekennzeichnet, daß sie nach dem Verfahren gemäß den Ansprüchen 1 bis 6 verwürfelte Signale dekodiert.

## Claims

1. Method of scrambling composite video signals, according to which the scrambling is carried out by circular line permutation controlled by a pseudo-random sequence, and the unscrambling is carried out using a pseudo-random sequence which is identical to and synchronised with the one used for the scrambling, the pseudo-random sequence depending on a control word whose encoded value is transmitted with the video signal, characterised in that the start of the scrambled zone (B+C) of each line is chosen so that it is situated after the start of the useful section of the line (SUL).

2. Method according to Claim 1, characterised in that the start of the scrambled zone varies in the course of time.

3. Method according to Claim 2, characterised in that the said variation in the start of the scrambled zone takes place every 40 ms.

4. Method according to any of the preceding claims, characterised in that the complete non-scrambled section (A) of each line is delayed on transmission and in that this delay is equal to the duration of one line.

5. Method according to any of the preceding claims, characterised in that samples are repeated on either side of the break point (X) of each line.

6. Method according to Claim 5, characterised in that interpolation samples are inserted.

7. Decoder for an image transmission system comprising scrambling and unscrambling devices for composite video signals using line permutation in a transmitter and in receivers respectively, characterised in that each receiver decoder comprises, in its digital video unscrambling circuit (6), as delay lines, two stacks of the "FIFO" type (13, 14) alternately in the mode for writing the scrambled video signals and in read mode, the said decoder also comprising a buffer register (15) receiving the non-scrambled segment (A) of a line, the said non-scrambled segment corresponding to the line which will be read next from one of the FIFO stacks (13,14).

8. Device according to Claim 7, characterised in that the "FIFO" stacks are of the NEC $\mu$ PD 41101 c-x type (where x = 1, 2 or 3).

9. Device according to one of Claims 7 or 8, characterised in that the FIFO'S comprise read/write addressing counters comprising reset-to-zero inputs.

10. Device according to one of Claims 7 to 9, characterised in that it decodes signals scrambled according to the method according to Claims 1 to 6.

FIG.1

FIG.2

# FIG.3

# FIG.4